# EUROPEAN PATENT APPLICATION

(11) **EP 3 435 224 A1**
(43) Date of publication of application: **30.01.2019**
(21) Application number: 17769304.1
(22) Date of filing: 08.03.2017
(51) Int. Cl.: G06F 9/44

(54) **CONTROL METHOD AND DEVICE FOR MAP END AGGREGATION REGARDING USER TASK IN MR COMPUTING PLATFORM**

(30) Priority: 21.03.2016 CN 201610161897
(71) Applicant: Alibaba Group Holding Limited, Grand Cayman (KY)
(72) Inventor: JIA, Yuanqiao, Hangzhou Zhejiang 311121 (CN); SUN, Weiguang, Hangzhou Zhejiang 311121 (CN)
(74) Representative: Finnegan Europe LLP
(86) International application number: PCT/CN2017/075948
(87) International publication number: WO 2017/162027

(57) **Abstract**

The present application relates to a control method and apparatus for map-side aggregation of a user task in a MapReduce (MR) computing platform. The control method for map-side aggregation of a user task in an MR computing platform includes: receiving a submitted user task; detecting whether the received user task meets a preset map-side aggregation enabling condition; and automatically controlling, according to a detection result, whether to enable map-side aggregation of the user task. Embodiments of the present invention can autonomously control whether to execute map-side aggregation for a user task according to a specific situation, so that effective map-side aggregation is performed for the user task and ineffective map-side aggregation is avoided, thus improving the execution efficiency of the user task and enhancing the performance of the MR computing platform.

## Description

The present application claims priority to Chinese Patent Application No. 201610161897.5, filed on March 21, 2016 and entitled "CONTROL METHOD AND APPARATUS FOR MAP-SIDE AGGREGATION OF USER TASK IN MR COMPUTING PLATFORM," which is incorporated herein by reference in its entirety.

### Technical Field

The present invention relates to the field of communications, and in particular, to a control method and an apparatus for map-side aggregation of a user task in a MapReduce (MR) computing platform.

### Background Art

An MR task is a type of important tasks in a distributed system, and it is run on an MR computing platform of the distributed system.

On the MR computing platform, an execution process of a user task is as follows: first of all, a submitted user task is converted into multiple independent MR Jobs; and then the MR Jobs are executed in parallel to complete the user task. The execution process of the MR Jobs involves a type of processing, i.e., map-side aggregation. The map-side aggregation is illustrated here by using an example. Finding the maximum in 1, 2, 3, 4, and 5 is used as an example. A solution that uses the map-side aggregation processing is as follows: first of all, the data is divided into two groups based on a data volume, for example [1, 2, 3] and [4, 5], then the maximums [3] and [5] of the two groups of data are found respectively, and [3] and [5] are further combined into [3, 5], thus finding the maximum 5. A solution without using the map-side aggregation is as follows: a system combines data into [1, 2, 3, 4, 5] based on a data volume, and then finds the maximum 5. When map in the MR Jobs is executed, the system will aggregate data on a map side if the processing function of map-side aggregation is in an enabled state.

The processing of map-side aggregation per se takes a certain execution time. If the map-side aggregation achieves a desirable aggregation effect, an execution time of the MR Jobs will be reduced, thus improving the execution efficiency of the entire user task. If the map-side aggregation does not achieve an aggregation effect (which means that an input data volume of map is equal to an output data volume), the execution time of the MR Jobs will not be reduced. On the contrary, as the map-side aggregation also takes a certain execution time, the execution time of the MR Jobs will be increased and the execution efficiency of the entire user task will be reduced compared with the situation where the map-side aggregation is not performed. On a large-scale MR computing platform for big data processing, a great number of user tasks are run every day. Therefore, the execution efficiency of user tasks has a significant influence on the performance of the MR computing platform.

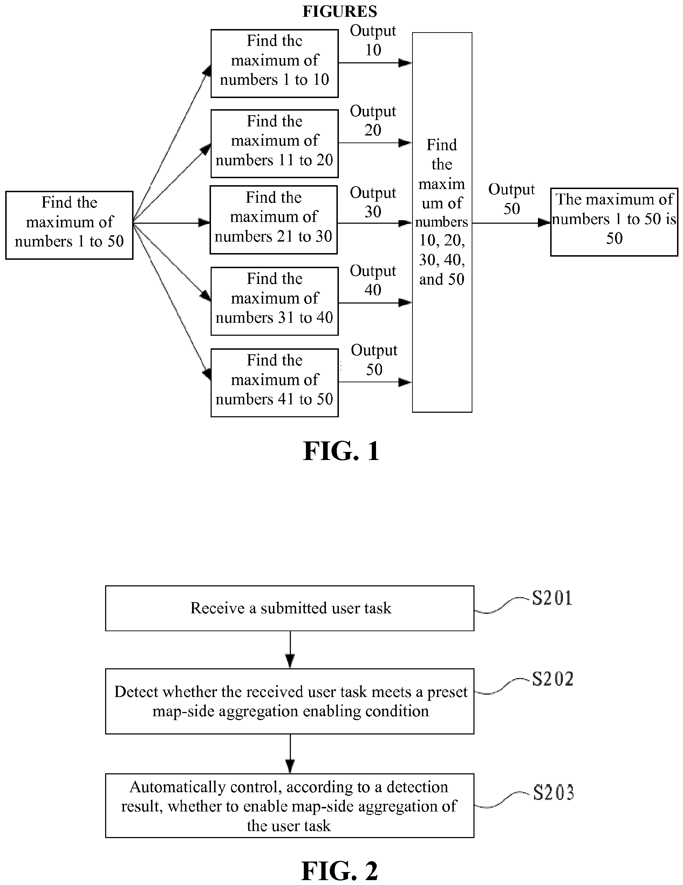

FIG. 1 is a schematic diagram of a scenario of map-side aggregation. As shown in FIG. 1, in the process of finding the maximum of a group of data [1, 2, 3, 4, 5, ..., 50], the data is divided into five groups, and the maximums of the five groups are calculated by five threads respectively. Then, the maximum of the results obtained by the five threads is calculated. Finally, the maximum of [1, 2, 3, 4, 5, ..., 50] is obtained. Such a processing manner has good performance but needs to consume more computing resources. The maximum of a group of data [1, 2, 3, 4, 5, ..., 50] can also be found based on the following two processing cases:
Case 1: the data [1, 2, 3, 4, 5, ..., 50] is put into one group, and one thread calculates the maximum of [1, 2, 3, 4, 5, ..., 50].
Case 2: the data [1, 2, 3, 4, 5, ..., 50] is divided into 50 groups, fifty threads calculate the maximums of the 50 groups respectively, and then the maximum of the results obtained by the fifty threads is calculated.

In case 1, 50 numbers are processed in each group, and the performance is poor. In case 2, one number is processed in each group, but a subsequently started thread needs to process 50 numbers; the performance is poor and more computing resources are consumed.

Neither case 1 nor case 2 achieves a desirable aggregation effect. Therefore, the map-side aggregations in case 1 and case 2 are ineffective.

Some terms are illustrated in the following.

Physical table: a physical table is a data storage structure in a database, and can also be referred to as a table for short.

Primary key (i.e., primary keyword) of a physical table: a primary key refers to a field that can uniquely determine a record in a physical table. For example, a student table (student number, name, gender, class) includes four fields: student number, name, gender, and class, wherein the student number can uniquely determine a record in the student table. Therefore, the student number is a primary key of the student table.

Foreign key (i.e., foreign keyword) of a physical table: a foreign key is used for association with another table; it is a field that can determine records in another table and is used for keeping data consistency. For example, if a field in table A is a primary key of table B, the field can be a foreign key of table A. For example, in the foregoing student table (student number, name, gender, class), the student number is a primary key of the student table. A computer operating record table (card number, student number, name, serial number) includes the field "student number," and "student number" is the primary key of the student table. Therefore, "student number" in the computer operating record table (card number, student number, name, serial number) is a foreign key of the student table.

It can be seen that the foreign key represents an association between two physical tables. A table that uses a foreign key of the other physical table as a primary keyword is referred to as a master table, and the table having the foreign key is referred to as a slave table of the master table.

Aggregation key: Table 1 below is used as an example.

Gender is an aggregation key if the total number of students of each gender in Table 1 needs to be calculated.

Class is an aggregation key if the total number of students in each class in Table 1 needs to be calculated.

It can be seen that a field in the table on which aggregation is performed is an aggregation key.

**Table 1**

| Class | Gender | Number of students |
|---|---|---|
| Grade 1 | Male | 10 |
| Grade 1 | Female | 20 |
| Grade 2 | Male | 15 |
| Grade 2 | Female | 18 |

Currently, in the related art, a processing system of the MR computing platform either enables or disables map-side aggregation for all user tasks. Such an inflexible manner can neither improve the execution efficiency of a user task by using the effective map-side aggregation nor prevent ineffective map-side aggregation from reducing the execution efficiency of the user task.

### Summary of the Invention

An objective of the present invention is to provide a control method and apparatus for map-side aggregation of a user task in an MR computing platform, so as to improve the execution efficiency of a user task and enhance the performance of the MR computing platform.

To achieve the foregoing objective, the present invention proposes a control method for map-side aggregation of a user task in an MR computing platform, including:
receiving a submitted user task;
detecting whether the received user task meets a preset map-side aggregation enabling condition; and
automatically controlling, according to a detection result, whether to enable map-side aggregation of the user task.

Further, the foregoing method can also have the following characteristic: the map-side aggregation enabling condition includes:
the user task being a non-CREATE TABLE statement, and an aggregation key being neither a primary key of a physical table of the user task nor a foreign key of the physical table of the user task.

Further, the foregoing method can also have the following characteristic: the map-side aggregation enabling condition includes:
the user task being a non-CREATE TABLE statement, and a ratio of a total input data volume to a total output data volume of map-side aggregation in a historical map-side aggregation record of the user task being greater than or equal to a preset ratio threshold.

Further, the foregoing method can also have the following characteristic: the map-side aggregation enabling condition includes:
the user task being a non-CREATE TABLE statement, and map-side aggregation being manually set for the user task.

Further, the foregoing method can also have the following characteristic: before the step of receiving a submitted user task, the method further comprises:
presetting the map-side aggregation enabling condition.

Further, the foregoing method can also have the following characteristic: the method further includes:
in the case where the user task is a CREATE TABLE statement, executing the CREATE TABLE statement to create a physical table;
prompting a user to specify a primary key and a foreign key of the created physical table; and
setting the primary key and the foreign key of the created physical table according to the specification of the user.

The control method for map-side aggregation of a user task in an MR computing platform according to the embodiment of the present invention can improve the execution efficiency of a user task and enhance the performance of the MR computing platform.

To achieve the foregoing objective, the present invention further proposes a control apparatus for map-side aggregation of a user task in an MR computing platform, including:
a receiving module configured to receive a submitted user task;
a detection module configured to detect whether the user task received by the receiving module meets a preset map-side aggregation enabling condition; and
a control module configured to automatically control, according to a detection result of the detection module, whether to enable map-side aggregation of the user task.

Further, the foregoing apparatus can also have the following characteristic: the map-side aggregation enabling condition includes:
the user task being a non-CREATE TABLE statement, and an aggregation key being neither a primary key of a physical table of the user task nor a foreign key of the physical table of the user task.

Further, the foregoing apparatus can also have the following characteristic: the map-side aggregation enabling condition includes:
the user task being a non-CREATE TABLE statement, and a ratio of a total input data volume to a total output data volume of map-side aggregation in a historical map-side aggregation record of the user task being greater than or equal to a preset ratio threshold.

Further, the foregoing apparatus can also have the following characteristic: the map-side aggregation enabling condition includes:
the user task being a non-CREATE TABLE statement, and map-side aggregation being manually set for the user task.

Further, the foregoing apparatus can also have the following characteristic: the apparatus further includes:
a presetting module connected to the detection module and configured to preset the map-side aggregation enabling condition.

Further, the foregoing apparatus can also have the following characteristic: the apparatus further includes:
a creation module configured to: in the case where the user task is a CREATE TABLE statement, execute the CREATE TABLE statement to create a physical table;
a prompt module configured to prompt a user to specify a primary key and a foreign key of the physical table created by the creation module; and
a setting module configured to set, according to the specification of the user, the primary key and the foreign key of the physical table created by the creation module.

The control apparatus for map-side aggregation of a user task in an MR computing platform according to the embodiment of the present invention can improve the execution efficiency of a user task and enhance the performance of the MR computing platform.

To achieve the foregoing objective, the present invention further proposes a control apparatus for map-side aggregation of a user task in an MR computing platform, including:
a processor; and
a memory configured to store an instruction executable by the processor;
wherein the processor is configured to:
receive a submitted user task;
detect whether the received user task meets a preset map-side aggregation enabling condition; and
automatically control, according to a detection result, whether to enable map-side aggregation of the user task.

The control apparatus for map-side aggregation of a user task in an MR computing platform according to the embodiment of the present invention can improve the execution efficiency of a user task and enhance the performance of the MR computing platform.

### Brief Description of the Drawings

FIG. 1 is a schematic diagram of a scenario of map-side aggregation;
FIG. 2 is a flowchart of a control method for map-side aggregation of a user task in an MR computing platform according to Embodiment 1 of the present invention;
FIG. 3 is a flowchart of a control method for map-side aggregation of a user task in an MR computing platform according to Embodiment 2 of the present invention;
FIG. 4 is a flowchart of a control method for map-side aggregation of a user task in an MR computing platform according to Embodiment 3 of the present invention;
FIG. 5 is a structural block diagram of a control apparatus for map-side aggregation of a user task in an MR computing platform according to Embodiment 4 of the present invention;
FIG. 6 is a structural block diagram of a control apparatus for map-side aggregation of a user task in an MR computing platform according to Embodiment 5 of the present invention; and
FIG. 7 is a structural block diagram of a control apparatus for map-side aggregation of a user task in an MR computing platform according to Embodiment 6 of the present invention.

### Detailed Description

The principle and features of the present invention are described in the following with reference to the accompanying drawings. Embodiments listed are merely used for illustrating the present invention and are not intended to limit the scope of the present invention. All embodiments obtained by those of ordinary skill in the art according to the spirit of the present invention without creative efforts belong to the protection scope of the present invention.

FIG. 2 is a flowchart of a control method for map-side aggregation of a user task in an MR computing platform according to Embodiment 1 of the present invention. As shown in FIG. 2, in this embodiment, the control method for map-side aggregation of a user task in an MR computing platform can include the following steps:
Step S201. A submitted user task is received.
Step S202. It is detected whether the received user task meets a preset map-side aggregation enabling condition.

The map-side aggregation enabling condition refers to that effective map-side aggregation can be submitted for the user task. That the user task meets the map-side aggregation enabling condition usually means that map-side aggregation performed for the user task is effective and can improve the performance of the MR computing platform. That the user task does not meet the map-side aggregation enabling condition usually means that map-side aggregation performed for the user task is ineffective, which wastes a lot of computing resources while failing to improve the performance of the MR computing platform.

The map-side aggregation enabling condition can include: the user task being a non-CREATE TABLE statement, and an aggregation key being neither a primary key of a physical table of the user task nor a foreign key of the physical table of the user task. To facilitate reference, this map-side aggregation enabling condition is referred to as map-side aggregation enabling condition 1 for short in the following. When the aggregation key is a primary key or foreign key of the physical table, a result of the map-side aggregation is that an output is equal to an input, and the map-side aggregation is definitely ineffective. Therefore, the map-side aggregation is effective only when the aggregation key is neither the primary key of the physical table of the user task nor the foreign key of the physical table of the user task. The map-side aggregation enabling condition 1 eliminates a type of user tasks for which map-side aggregation is ineffective and avoids performing ineffective map-side aggregation for this type of user tasks, thus improving the execution efficiency of user tasks and enhancing the performance of the MR computing platform.

The CREATE TABLE statement can be a Data Definition Language (DDL) CREATE TABLE statement or other CREATE TABLE statements.

The foregoing map-side aggregation enabling condition 1 can be used to judge, for both a first-run user task and a non-first-run user task, whether it is necessary to enable map-side aggregation.

The map-side aggregation enabling condition can further include: the user task being a non-CREATE TABLE statement, and a ratio of a total input data volume to a total output data volume of map-side aggregation in a historical map-side aggregation record of the user task being greater than or equal to a preset ratio threshold. The ratio threshold can be set according to an empirical value. This map-side aggregation enabling condition is referred to as map-side aggregation enabling condition 2 for short in the following.

When the ratio of the total input data volume to the total output data volume of map-side aggregation in the historical map-side aggregation record of the user task is greater than or equal to the preset ratio threshold, it indicates that map-side aggregation of the user task is effective. Therefore, map-side aggregation of the user task can be enabled. The map-side aggregation enabling condition 1 eliminates a type of user tasks for which map-side aggregation is ineffective by using a method similar to "blacklist," and the map-side aggregation enabling condition 2 includes a type of user tasks for which map-side aggregation is effective by using a method similar to "white list".

In an application, the map-side aggregation enabling condition 2 is suitable for judging, for a non-first-run user task, whether it is necessary to enable map-side aggregation.

The map-side aggregation enabling condition can further include: the user task being a non-CREATE TABLE statement, and map-side aggregation being manually set for the user task. This map-side aggregation enabling condition is referred to as map-side aggregation enabling condition 3 for short in the following.

The map-side aggregation enabling condition 3 enables the present invention to judge whether to enable map-side aggregation according to a specific requirement of a user for a specific user task, which helps meet a personal requirement of the user and improve user satisfaction.

In an application, multiple map-side aggregation enabling conditions can be preset at the same time, and map-side aggregation of a user task is enabled as long as the user task meets one of the map-side aggregation enabling conditions.

Step S203. It is automatically controlled, according to a detection result, whether to enable map-side aggregation of the user task.

That is, when the received user task meets the preset map-side aggregation enabling condition, map-side aggregation of the user task is enabled; when the received user task does not meet the preset map-side aggregation enabling condition, map-side aggregation of the user task is disabled. As such, enabling of map-side aggregation of the user task can be controlled reasonably, so that map-side aggregation is performed effectively, avoiding a waste of resources and a decrease in the performance of the MR computing platform caused by ineffective map-side aggregation.

The control method for map-side aggregation of a user task in an MR computing platform in this embodiment of the present invention can autonomously control whether to execute map-side aggregation for a user task according to a specific situation, so that effective map-side aggregation is performed for the user task and ineffective map-side aggregation is avoided, thus improving execution the efficiency of the user task and enhancing the performance of the MR computing platform.

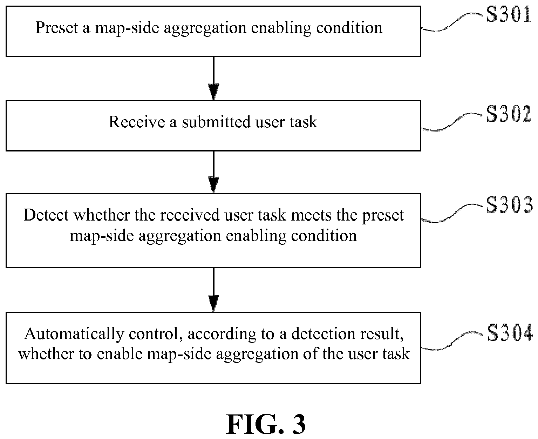

FIG. 3 is a flowchart of a control method for map-side aggregation of a user task in an MR computing platform according to Embodiment 2 of the present invention. As shown in FIG. 2, the control method for map-side aggregation of a user task in an MR computing platform in this embodiment can include the following steps:
Step S301. A map-side aggregation enabling condition is preset.

Through this step, a user can set or modify a map-side aggregation enabling condition according to features of a user task, so that the map-side aggregation enabling condition adapts to the features of the user task, thus improving the processing efficiency. For example, all user tasks to be processed have been run before. In other words, all the user tasks to be processed are not run for the first time. In this case, it is feasible to set only one map-side aggregation enabling condition, i.e., the foregoing map-side aggregation enabling condition 2. As such, it is unnecessary to make judgments based on all map-side aggregation enabling conditions one by one, thus further improving the execution efficiency of user tasks and further enhancing the performance of the MR computing platform.

Step S302. A submitted user task is received.

Step S303. It is detected whether the received user task meets the preset map-side aggregation enabling condition.

Step S304. It is automatically controlled, according to a detection result, whether to enable map-side aggregation of the user task.

The control method for map-side aggregation of a user task in an MR computing platform in this embodiment of the present invention can autonomously control whether to execute map-side aggregation for a user task according to a specific situation, so that effective map-side aggregation is performed for the user task and ineffective map-side aggregation is avoided, thus improving the execution efficiency of the user task and enhancing the performance of the MR computing platform. Moreover, the control method for map-side aggregation of a user task in an MR computing platform in this embodiment of the present invention can further enable a user to set or modify a map-side aggregation enabling condition according to features of a user task, so that the map-side aggregation enabling condition adapts to the features of the user task, thus further improving the execution efficiency of the user task and enhancing the performance of the MR computing platform.

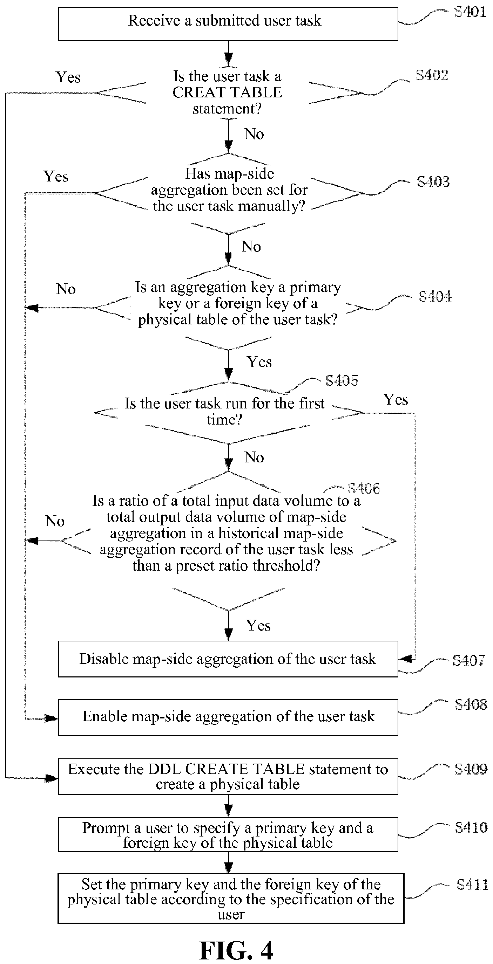

FIG. 4 is a flowchart of a control method for map-side aggregation of a user task in an MR computing platform according to Embodiment 3 of the present invention. As shown in FIG. 4, the control method for map-side aggregation of a user task in an MR computing platform in this embodiment can include the following steps:
Step S401. A submitted user task is received.
Step S402. It is detected whether the user task is a CREATE TABLE statement; if the user task is a CREATE TABLE statement, step S409 is performed; and if the user task is a not a CREATE TABLE statement (or the user task is a non-CREATE TABLE statement), step S403 is performed.
Step S403. It is detected whether map-side aggregation has been set for the user task manually; if the map-side aggregation has been set for the user task manually, step S408 is performed; and if the map-side aggregation has not been set for the user task manually, step S404 is performed.
Step S404. It is detected whether the aggregation key is a primary key or a foreign key of a physical table of the user task; if the aggregation key is the primary key or the foreign key of the physical table of the user task, step S405 is performed; and if the aggregation key is neither the primary key nor the foreign key of the physical table of the user task, step S408 is performed.
Step S405. It is detected whether the user task is run for the first time; if the user task is run for the first time, step S407 is performed; and if the user task is not run for the first time, step S406 is performed.
Step S406. It is detected whether a ratio of a total input data volume to a total output data volume of map-side aggregation in a historical map-side aggregation record of the user task is less than a preset ratio threshold; if yes, step S407 is performed; otherwise, step S408 is performed.
Step S407. Map-side aggregation of the user task is enabled, and the procedure ends.
Step S408. Map-side aggregation of the user task is disabled, and the procedure ends.
Step S409. The CREATE TABLE statement is executed to create a physical table.
Step S410. The user is prompted to specify a primary key and a foreign key of the physical table created in step S409.
Step S411. The primary key and the foreign key of the created physical table are set according to the specification of the user, and the procedure ends.

If the user does not specify the primary key and the foreign key of the physical table, it is assumed by default that the physical table has no primary key or foreign key.

After the primary key and the foreign key are set for the physical table, it is convenient to judge subsequently, based on the foregoing map-side aggregation enabling condition 1, whether to perform map-side aggregation for a user task related to the physical table. This helps expand the range of user tasks for which judgment can be made effectively.

The control method for map-side aggregation of a user task in an MR computing platform in this embodiment of the present invention can autonomously control whether to execute map-side aggregation for a user task according to a specific situation, so that effective map-side aggregation is performed for the user task and ineffective map-side aggregation is avoided, thus improving the execution efficiency of the user task and enhancing the performance of the MR computing platform.

The present invention further proposes a control apparatus for map-side aggregation of a user task in an MR computing platform, which is configured to implement the foregoing control method for map-side aggregation of a user task in an MR computing platform. The principle illustration in the foregoing embodiment of the control method for map-side aggregation of a user task in an MR computing platform of the present invention is also applicable to the following embodiment of the control apparatus for map-side aggregation of a user task in an MR computing platform.

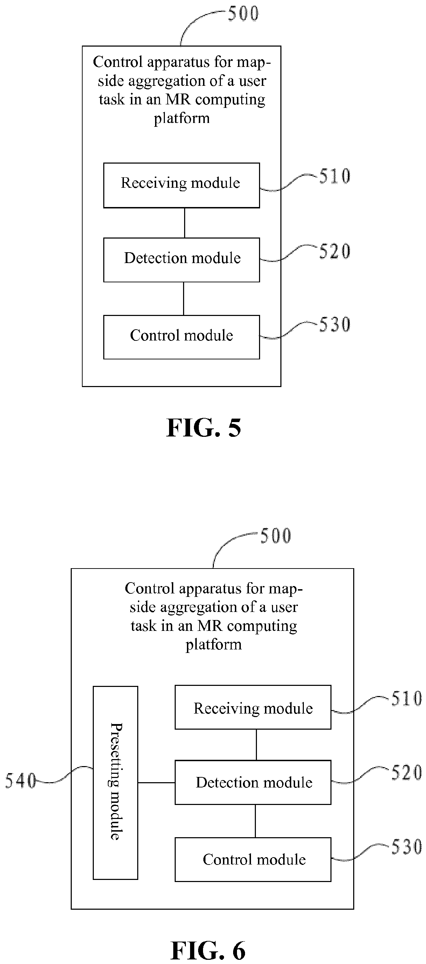

FIG. 5 is a structural block diagram of a control apparatus for map-side aggregation of a user task in an MR computing platform according to Embodiment 4 of the present invention. As shown in FIG. 5, the control apparatus 500 for map-side aggregation of a user task in an MR computing platform in this embodiment can include a receiving module 510, a detection module 520 and a control module 530. The receiving module 510, the detection module 520 and the control module 530 are connected in sequence. The receiving module 510 is configured to receive a submitted user task. The detection module 520 is configured to detect whether the user task received by the receiving module 510 meets a preset map-side aggregation enabling condition. The control module 530 is configured to automatically control, according to a detection result of the detection module 520, whether to enable map-side aggregation of the user task.

The map-side aggregation enabling condition can include: the user task being a non-CREATE TABLE statement, and an aggregation key being neither a primary key of a physical table of the user task nor a foreign key of the physical table of the user task.

A CREATE TABLE statement can be a DDL CREATE TABLE statement or other CREATE TABLE statements.

The map-side aggregation enabling condition can further include: the user task being a non-CREATE TABLE statement, and a ratio of a total input data volume to a total output data volume of map-side aggregation in a historical map-side aggregation record of the user task being greater than or equal to a preset ratio threshold. The ratio threshold can be set according to an empirical value.

The map-side aggregation enabling condition can further include: the user task being a non-CREATE TABLE statement, and map-side aggregation being manually set for the user task.

In an application, multiple map-side aggregation enabling conditions can be preset at the same time, and the control module 530 can enable map-side aggregation of a user task as long as the user task meets one of the map-side aggregation enabling conditions.

The control apparatus for map-side aggregation of a user task in an MR computing platform in this embodiment of the present invention can autonomously control whether to execute map-side aggregation for a user task according to a specific situation, so that effective map-side aggregation is performed for the user task and ineffective map-side aggregation is avoided, thus improving the execution efficiency of the user task and enhancing the performance of the MR computing platform.

FIG. 6 is a structural block diagram of a control apparatus for map-side aggregation of a user task in an MR computing platform according to Embodiment 5 of the present invention.

As shown in FIG. 6, the control apparatus 500 for map-side aggregation of a user task in an MR computing platform in this embodiment can include a receiving module 510, a detection module 520, a control module 530 and a presetting module 540. The receiving module 510, the detection module 520 and the control module 530 are connected in sequence. The presetting module 540 is connected to the detection module 520. The receiving module 510 is configured to receive a submitted user task. The detection module 520 is configured to detect whether the user task received by the receiving module 510 meets a preset map-side aggregation enabling condition. The control module 530 is configured to automatically control, according to a detection result of the detection module 520, whether to enable map-side aggregation of the user task. The presetting module 540 is configured to preset the map-side aggregation enabling condition.

Through the presetting module 540, a user can set or modify a map-side aggregation enabling condition according to features of a user task, so that the map-side aggregation enabling condition adapts to the features of the user task, thus improving the processing efficiency.

The control apparatus for map-side aggregation of a user task in an MR computing platform in this embodiment of the present invention can autonomously control whether to execute map-side aggregation for a user task according to a specific situation, so that effective map-side aggregation is performed for the user task and ineffective map-side aggregation is avoided, thus improving the execution efficiency of the user task and enhancing the performance of the MR computing platform. Moreover, the control apparatus for map-side aggregation of a user task in an MR computing platform in this embodiment of the present invention can further enable a user to set or modify a map-side aggregation enabling condition according to features of a user task, so that the map-side aggregation enabling condition adapts to the features of the user task, thus further improving the execution efficiency of the user task and enhancing the performance of the MR computing platform.

In other embodiments of the present invention, the control apparatus for map-side aggregation of a user task in an MR computing platform can further include a creation module, a prompt module and a setting module. The prompt module and the setting module are connected to the creation module, respectively. The creation module is configured to: in the case where the user task is a CREATE TABLE statement, execute the CREATE TABLE statement to create a physical table. The prompt module is configured to prompt a user to specify a primary key and a foreign key of the physical table created by the creation module. The setting module is configured to set, according to the specification of the user, the primary key and the foreign key of the physical table created by the creation module.

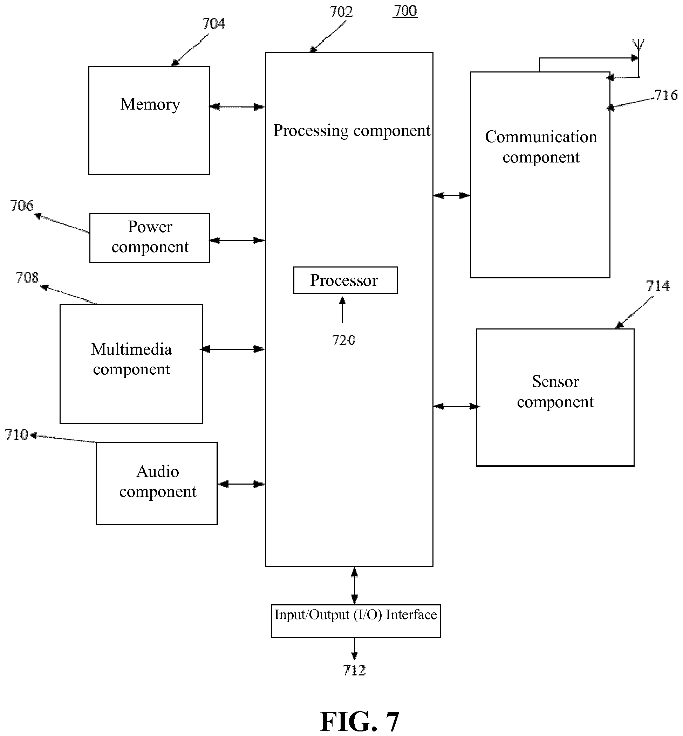

FIG. 7 is a structural block diagram of a control apparatus for map-side aggregation of a user task in an MR computing platform according to Embodiment 6 of the present invention. As shown in FIG. 7, the control apparatus 700 for map-side aggregation of a user task in an MR computing platform can include one or more of the following components: a processing component 702, a memory 704, a power component 706, a multimedia component 708, an audio component 710, an input/output (I/O) interface 712, a sensor component 714, and a communication component 716.

The processing component 702 usually controls overall operations of the control apparatus 700 for map-side aggregation of a user task in an MR computing platform, for example, operations associated with display, a phone call, data communication, a camera operation, and a record operation. The processing component 702 can include one or more processors 720 to execute instructions, so as to complete all or some of the steps of the foregoing method. The steps specifically include: receiving a submitted user task; detecting whether the received user task meets a preset map-side aggregation enabling condition; and automatically controlling, according to a detection result, whether to enable map-side aggregation of the user task. In addition, the processing component 702 can include one or more modules to facilitate interaction between the processing component 702 and other components. For example, the processing component 702 can include a multimedia module to facilitate interaction between the multimedia component 708 and the processing component 702.

The memory 704 is configured to store various types of data to support operations in the control apparatus 700 for map-side aggregation of a user task in an MR computing platform. Examples of the data include an instruction of any application program or method, contact data, address book data, a message, a picture, a video, and the like used to be operated on the control apparatus 700 for map-side aggregation of a user task in an MR computing platform. The memory 704 can be implemented by any type of volatile or non-volatile storage devices or their combination, for example, a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disc.

The power component 706 supplies power for various components of the control apparatus 700 for map-side aggregation of a user task in an MR computing platform. The power component 706 can include a power management system, one or more power sources, and other components associated with power generation, management, and distribution for the control apparatus 700 for map-side aggregation of a user task in an MR computing platform.

The multimedia component 708 includes a screen that provides an output interface between the control apparatus 700 for map-side aggregation of a user task in an MR computing platform and a user. In some embodiments, the screen can include a liquid crystal display (LCD) and a touch panel (TP). If the screen includes a TP, the screen can be implemented as a touch screen to receive an input signal from the user. The TP includes one or more touch sensors to sense a touch, a slide, and a gesture on the TP. The TP not only can sense the boundary of a touch or slide action but also can detect the duration and pressure related to the touch or slide operation. In some embodiments, the multimedia component 808 includes a front camera and/or a rear camera. When the control apparatus 700 for map-side aggregation of a user task in an MR computing platform is in an operating mode, such as a shooting mode or a video mode, the front camera and/or the rear camera can receive external multimedia data. Each front camera and rear camera can be a fixed optical lens system or have focusing and optic zoom capabilities.

The audio component 710 is configured to output and/or input an audio signal. For example, the audio component 710 includes a microphone (MIC). When the control apparatus 700 for map-side aggregation of a user task in an MR computing platform is in an operating mode, such as a calling mode, a recording mode, and a speech recognition mode, the MIC is configured to receive an external audio signal. The received audio signal can be further stored in the memory 704 or sent by using the communication component 716. In some embodiments, the audio component 710 further includes a loudspeaker configured to output an audio signal.

The I/O interface 712 provides an interface between the processing component 702 and a peripheral interface module. The peripheral interface module can be a keyboard, a click wheel, buttons, and the like. The buttons can include, but are not limited to, a home button, a volume button, a start button, and a lock button.

The sensor component 714 includes one or more sensors configured to provide state evaluation of various aspects for the control apparatus 700 for map-side aggregation of a user task in an MR computing platform. For example, the sensor component 714 can detect an on/off state of the control apparatus 700 for map-side aggregation of a user task in an MR computing platform, and can detect relative positioning of components, for example, the components are a display and a small keyboard of the control apparatus 700 for map-side aggregation of a user task in an MR computing platform. The sensor component 714 can further detect a position change of the control apparatus 700 for map-side aggregation of a user task in an MR computing platform or a component of the control apparatus 700 for map-side aggregation of a user task in an MR computing platform, whether or not a user is in contact with the control apparatus 700 for map-side aggregation of a user task in an MR computing platform, the orientation or acceleration/deceleration of the control apparatus 700 for map-side aggregation of a user task in an MR computing platform, and a temperature change of the control apparatus 700 for map-side aggregation of a user task in an MR computing platform. The sensor component 714 can include a proximity sensor configured to detect the presence of an object nearby without any physical contact. The sensor component 714 can further include an optical sensor, such as a CMOS or CCD image sensor configured to be used in an imaging application. In some embodiments, the sensor component 714 can further include an acceleration sensor, a gyroscope sensor, a magnetic sensor, a pressure sensor, or a temperature sensor.

The communication component 716 is configured to facilitate wired or wireless communication between the control apparatus 700 for map-side aggregation of a user task in an MR computing platform and other devices. The control apparatus 700 for map-side aggregation of a user task in an MR computing platform can access a wireless network based on a communications standard, for example, WiFi, 2G, 3G, 4G or their combination. In an exemplary embodiment, the communication component 716 receives a broadcast signal or broadcast-related information from an external broadcast management system via a broadcast channel. In an exemplary embodiment, the communication component 716 further includes a near-field communication (NFC) module to facilitate near field communication. For example, the NFC module can be implemented based on a radio frequency identification (RFID) technology, an Infrared Data Association (IrDA) technology, an ultra-wideband (UWB) technology, a Bluetooth (BT) technology, and other technologies.

In an exemplary embodiment, the control apparatus 700 for map-side aggregation of a user task in an MR computing platform can be implemented by one or more application-specific integrated circuits (ASICs), a digital signal processor (DSP), a digital signal processing device (DSPD), a programmable logic device (PLD), a field programmable gate array (FPGA), a controller, a microcontroller, a microprocessor or other electronic elements, and is configured to execute the foregoing method.

In an exemplary embodiment, a non-temporary computer readable storage medium including an instruction is further provided, for example, a memory 704 including an instruction. The instruction can be executed by the processor 720 of the control apparatus 700 for map-side aggregation of a user task in an MR computing platform to complete the foregoing method. For example, the non-temporary computer readable storage medium can be a ROM, a random access memory (RAM), a CD-ROM, a magnetic tape, a floppy disk, an optical data storage device, and so on.

An embodiment of the present invention further provides a non-temporary computer readable storage medium. When an instruction in the storage medium is executed by a processor of a mobile terminal, the mobile terminal can execute a control method for map-side aggregation of a user task in an MR computing platform, wherein the method includes: receiving a submitted user task; detecting whether the received user task meets a preset map-side aggregation enabling condition; and automatically controlling, according to a detection result, whether to enable map-side aggregation of the user task.

The control apparatus for map-side aggregation of a user task in an MR computing platform in this embodiment of the present invention can autonomously control whether to execute map-side aggregation for a user task according to a specific situation, so that effective map-side aggregation is performed for the user task and ineffective map-side aggregation is avoided, thus improving the execution efficiency of the user task and enhancing the performance of the MR computing platform.

Described above are merely preferred embodiments of the present invention, which are not intended to limit the present invention. Any modification, equivalent replacement, improvement and the like made within the spirit and principle of the present invention should be included in the protection scope of the present invention.

## Claims

1. A control method for map-side aggregation of a user task in a MapReduce (MR) computing platform, comprising:
receiving a submitted user task;
detecting whether the received user task meets a preset map-side aggregation enabling condition; and
automatically controlling, according to a detection result, whether to enable map-side aggregation of the user task.

2. The control method for map-side aggregation of a user task in an MR computing platform according to claim 1, wherein the map-side aggregation enabling condition comprises:
the user task being a non-CREATE TABLE statement, and an aggregation key being neither a primary key of a physical table of the user task nor a foreign key of the physical table of the user task.

3. The control method for map-side aggregation of a user task in an MR computing platform according to claim 1, wherein the map-side aggregation enabling condition comprises:
the user task being a non-CREATE TABLE statement, and a ratio of a total input data volume to a total output data volume of map-side aggregation in a historical map-side aggregation record of the user task being greater than or equal to a preset ratio threshold.

4. The control method for map-side aggregation of a user task in an MR computing platform according to claim 1, wherein the map-side aggregation enabling condition comprises:
the user task being a non-CREATE TABLE statement, and map-side aggregation being manually set for the user task.

5. The control method for map-side aggregation of a user task in an MR computing platform according to claim 1, before the step of receiving a submitted user task, further comprising:
presetting the map-side aggregation enabling condition.

6. The control method for map-side aggregation of a user task in an MR computing platform according to claim 1, further comprising:
in the case where the user task is a CREATE TABLE statement, executing the CREATE TABLE statement to create a physical table;
prompting a user to specify a primary key and a foreign key of the created physical table; and
setting the primary key and the foreign key of the physical table according to the specification of the user.

7. A control apparatus for map-side aggregation of a user task in a MapReduce (MR) computing platform, comprising:
a receiving module configured to receive a submitted user task;
a detection module configured to detect whether the user task received by the receiving module meets a preset map-side aggregation enabling condition; and
a control module configured to automatically control, according to a detection result of the detection module, whether to enable map-side aggregation of the user task.

8. The control apparatus for map-side aggregation of a user task in an MR computing platform according to claim 7, wherein the map-side aggregation enabling condition comprises:
the user task being a non-CREATE TABLE statement, and an aggregation key being neither a primary key of a physical table of the user task nor a foreign key of the physical table of the user task.

9. The control apparatus for map-side aggregation of a user task in an MR computing platform according to claim 7, wherein the map-side aggregation enabling condition comprises:
the user task being a non-CREATE TABLE statement, and a ratio of a total input data volume to a total output data volume of map-side aggregation in a historical map-side aggregation record of the user task being greater than or equal to a preset ratio threshold.

10. The control apparatus for map-side aggregation of a user task in an MR computing platform according to claim 7, wherein the map-side aggregation enabling condition comprises:
the user task being a non-CREATE TABLE statement, and map-side aggregation being manually set for the user task.

11. The control apparatus for map-side aggregation of a user task in an MR computing platform according to claim 7, further comprising:
a presetting module connected to the detection module and configured to preset the map-side aggregation enabling condition.

12. The control apparatus for map-side aggregation of a user task in an MR computing platform according to claim 7, further comprising:
a creation module configured to: in the case where the user task is a CREATE TABLE statement, execute the CREATE TABLE statement to create a physical table;
a prompt module configured to prompt a user to specify a primary key and a foreign key of the physical table created by the creation module; and
a setting module configured to set, according to the specification of the user, the primary key and the foreign key of the physical table created by the creation module.

13. A control apparatus for map-side aggregation of a user task in an MR computing platform, comprising:
a processor; and
a memory configured to store an instruction executable by the processor;
wherein the processor is configured to:
receive a submitted user task;
detect whether the received user task meets a preset map-side aggregation enabling condition; and
automatically control, according to a detection result, whether to enable map-side aggregation of the user task.
